# EUROPEAN PATENT SPECIFICATION

(11) **EP 1 751 039 B1**
(45) Date of publication and mention of the grant of the patent: **21.07.2010**
(21) Application number: 05741994.7
(22) Date of filing: 23.05.2005
(51) Int. Cl.: B65G 35/00, F04B 43/12, A23L 1/212

(54) **PRODUCT CONVEYING METHOD IN PLANTS FOR MAKING PUREE AND DEVICE THAT CARRIES OUT THIS METHOD**
PRODUKTBEFÖRDERUNGSVERFAHREN IN ANLAGEN ZUR HERSTELLUNG VON PÜREE UND DIESES VERFAHREN DURCHFÜHRENDE VORRICHTUNG
PROCEDE DE TRANSPORT DE PRODUITS DANS UNE USINE DE PRODUCTION DE PUREE ET DISPOSITIF POUR LA MISE EN OEUVRE DE CE PROCEDE

(30) Priority: 24.05.2004 IT PI20040037
(43) Date of publication of application: 14.02.2007
(73) Proprietor: Bertocchi, Alessandro, 43100 Parma (IT)
(72) Inventor: BERTOCCHI, Alessandro, I-43100 Parma (IT)
(74) Representative: Celestino, Marco
(86) International application number: PCT/IB2005/001393
(87) International publication number: WO 2005/115884

(56) References cited:
- WO-A-02/058489
- DE-A1- 19 824 960
- FR-A- 2 122 146
- US-A- 4 735 553
- US-A- 6 016 935
- US-A- 6 102 678

## Description

### Field of the invention

The present invention relates to machines for the food industry; in particular the invention relates to a product conveying method in plants for making puree from vegetable or animal food according to the preamble of claim 1.

Furthermore, the invention relates to an apparatus for conveying a puree product, according to the preamble of claim 3.

### Background of the invention

In the following description an apparatus is described for room temperature extraction, so called cold extraction, of puree from vegetable or animal food. Cold or room temperature extraction is a process that is carried out in a temperature range that extends from a minimum conservation temperature of the product, in any case higher than a freezing temperature, to a maximum environment temperature without heating, normally less than 40-45°C.

As well known, the cold extraction of puree from fruit and vegetables generally provides a cold turbo-extractor, for example as described in IT 1199392 in the name of the same applicant, or a separated softening apparatus, for example as described in IT 1249363 also in the name of the same applicant, followed by a turbo-extractor. In both cases, a puree eventually obtained exits in a small reservoir, or simply a tube, located under the machine, and then reaches a pump.

Concerning a softened product in case of separated softening, it is very important that the product leaves the softening apparatus in a very regular way, but also that it reaches quickly the turbo-extractor.

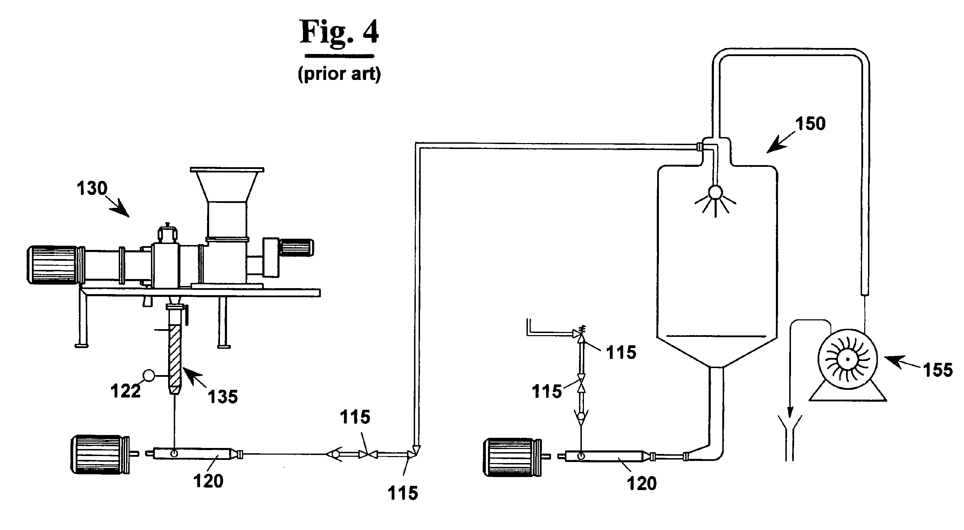

Similarly, concerning a cold turbo-extractor, indicated as 130 in figure 4, it is important that the puree exiting from the softening apparatus advances very regularly while reaching quickly another plant, such as a plant of enzymatic inactivation or a cold air removal apparatus 150. For this purpose, a pump 120 is normally used, of the type known as mono-pump (or Moyno® or mono-helical-screw pump), mounted downstream of the extractor 130. For a correct operation of the mono-pump 120 it is necessary to install a tube or a reservoir 135 to feed correctly the mono-pump 120 same. This tube or reservoir 135 must necessarily have a determined size for allowing upstream a small head of product, detected by a level sensor 122, in order to provide a pressure head necessary for operating correctly the pump.

One of the processes often provided downstream of the cold extraction is the so-called cold air removal process, as described in WO02058489, always in the name of the applicant. It must be noted that the choice of suitable pumps in association to an air removal apparatus is very relevant. In fact, by working under vacuum, an air removal apparatus must have upstream of it a suction pump that keeps the vacuum and prevents air to flow towards a vacuum reservoir of the air removal apparatus 150.

The puree without air is then fed to a plant for enzymatic inactivation as described in EP 0850572. However, drawing out the puree from the air removal apparatus is, in turn, a very critical step, since the puree at this stage is a viscous product coming from a vacuum reservoir. It is therefore necessary to use a powerful suction pump, which prevents, in particular when it is still, air from passing through towards the air removal reservoir. Even in this case it is known in the art, as shown in figure 4, a further mono-pump 120 as already described above, arranged downstream of the air removal reservoir 150.

In any case, in this type of softening + extracting + cold air removal plants, the use of such types of pumps and of valves causes several problems. In fact, for detecting any air moving from the pumps to the air removal apparatus, which would cause a loss of vacuum, it is necessary to provide various valves 115. Such valves 115, for example non return valves, on-off valves, back-pressure valves, flap valves etc., create a flow resistance in the duct, and cause the product to pass through small sections. This forced passage causes a shear stress and then a considerable loss of consistency of the puree, which is instead one of the most appreciated commercial features thereof.

Furthermore, the mono pumps, even if they are positive-displacement pumps, for their helical movement tend to produce shear stress in the puree and, especially at high speed, cause a loss of consistency of the puree.

Since that, moreover, such pumps cannot work without a product, otherwise they damage the motor, it is necessary an automatic level sensor in the portion of reservoir or tube that feeds the pump. An alarm is not sufficient, however, because as the flow rate varies the speed of the pump must change accordingly, to avoid that the product remains too much in the pump.

This situation is critical upstream from the turbo-extractor, since the cold chopped product has much air within it, and oxidation can damage the product very quickly, and also the liquid parts tend to separate quickly from the solid parts. It is therefore necessary to provide an automatic level sensor very sensitive and expensive coupled to a control unit that causes the level to be controlled by varying the speed of the pump.

A further drawback is that both back pressure valves and on-off valves are necessary for stopping the duct when the pumps are still. This causes sudden pressure variations in the ducts with consequent unsteadiness in the transitory periods, i.e. when the pump stops or when it starts, causing a general irregularity of operation in the plant.

In FR2122146 a batcher apparatus is described comprising two couples of rolls and a straight duct. This document also discloses a method for conveying and an apparatus for conveying according to the preamble of the appended claims 1 and 3 respectively.

US6102678 discloses a peristaltic pump of known type for medical applications.

### Summary of the invention

It is therefore a feature of the invention to provide a product conveying method, in plants for making puree from vegetable or animal food, which avoids the inlet of air in the conveying ducts even when the product is not present inside, assuring a vacuum tight in the air removal apparatus in any working conditions.

It is another feature of the invention to provide a product conveying method in plants for making puree that is remarkably easy and reliable to carry out with respect to the processes of prior art.

It is a further feature of the invention to provide a product conveying method in plants for making puree that allows obtaining a final product of higher quality than the known processes.

It is still a feature of the invention to provide a product conveying method in plants for making puree that is less expensive with respect to the known systems.

It is finally a feature of the invention to provide an apparatus capable of carrying out this method.

These and other features are accomplished with the conveying method according to the appended claim 1, for conveying a product between a first and a second point of a puree making plant, whose main feature is that the product is conveyed in a duct comprising at least one flexible portion that can be pressed. In particular, said pressing step causes a corresponding variation of the cross section of the flexible portion.

In particular, the product conveying method as above described can be used in processes of:
- cold softening of puree;
- cold extraction of puree;
- cold air removal;
- a combination of at least two of the above processes.

The method according to the invention provides a conveying action of the product in the duct. Optionally when the product can advance itself in the duct, for example by the presence of a head of product upstream of said flexible portion or of a suction pressure downstream, the method allows adjusting the flow of product preventing air from moving through the duct.

Successive sections of the flexible portion are pressed in a product conveying direction, causing the motion of the product in said direction.

Optionally a determined cross section of said flexible portion is pressed, and a control is possible through said flexible portion of the flow, which is carried out without a mechanical propulsion, i.e. with means selected from the group comprised of: a head of product upstream of said flexible portion or a suction pressure generated in the product downstream of the flexible portion.

In an embodiment not being part of the present invention, pressing means are provided movable in a product conveying direction to press the flexible portion of the duct at successive sections of the duct.

The flexible portion according to the invention may follow a circular path and the pressing means comprise at least a first and a second roller mounted at the end of an arm that is wheeled at the centre of the circular path, during the rotation of the arm said first and said second roller pressing the flexible portion of the duct against an outer support.

Advantageously, the flexible portion of the duct is integrated in a peristaltic pump.

In an embodiment not part of the present invention, concerning the first case, at least a first and a second roller are provided arranged at opposite sides with respect to the flexible portion of the duct, said rollers travelling in a product conveying direction. More in detail, in use said two rollers, which are located at a distance less than the maximum cross section of the duct, press the flexible portion and travel then causing the product to move inside.

In particular, the two rollers can close/open on/from the flexible portion of the duct and move in a product conveying direction between a starting position and an end position. More in detail, when the rollers reach the end position they open and move in an opposite direction back to the starting position.

In a further embodiment not part of the invention the rollers can be mounted on a first chain and press the flexible portion of the duct against support elements provided opposite to the chain with respect to the flexible portion of the duct.

Concerning an embodiment not part of the present invention, the flexible portion of the duct is integrated in a membrane valve. In particular, the membrane valve adjusts with precision the flow of the product that advances in the duct without means for mechanical propulsion, both when the product is not yet a puree and when the product is already a puree.

The motion of the product without means for mechanical propulsion can be carried out providing upstream from the membrane valve a head of product sufficient to cause it to advance; for example, the product can be contained in a hopper, located downstream a softening device, and a duct having the above described flexible portion follows the hopper. Alternatively, downstream of the duct having the above described flexible portion a suction pressure can be provided, such as a vacuum turbo-extractor.

### Brief description of the drawings

The invention will now illustrated with the following description of an exemplary embodiment thereof, exemplifying but not limitative, with reference to the attached drawings wherein:
- figure 1 shows diagrammatical side views of a possible exemplary embodiment of pressing means for carrying out the product conveying method in plants for making puree or fruit juice, according to the invention;
- figures 2 and 3 show pressing means which are not according to the invention;
- figure 4 shows a block diagram of a process for cold extraction and air removal using a product conveying method of prior art;
- figure 5 shows a block diagram of a process for softening, extracting and cold air removing ;

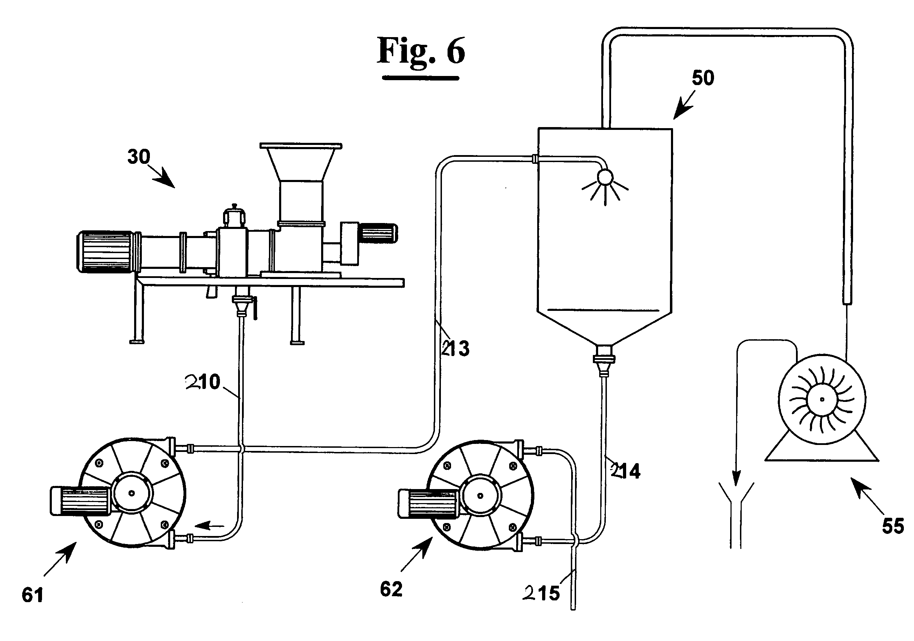

- figure 6 shows a block diagram of a process alternative to that of figure 5 ;
- figure 7 shows diagrammatically in an elevational side view an exemplary embodiment not part of the invention, of means for pressing the flexible portion in case of product capable of advancing by itself in the duct;
- figure 8 shows a cross sectional view of a membrane valve that operates as shown in figure 7.

### Description of a preferred exemplary embodiment

In all the present description the method is intended applied to cold or room temperature puree production, the adjective cold being referred to a temperature set between 2 and 45°C, corresponding to the temperature of the room where a product to treat, or a semifinished puree product before further treatment, are located.

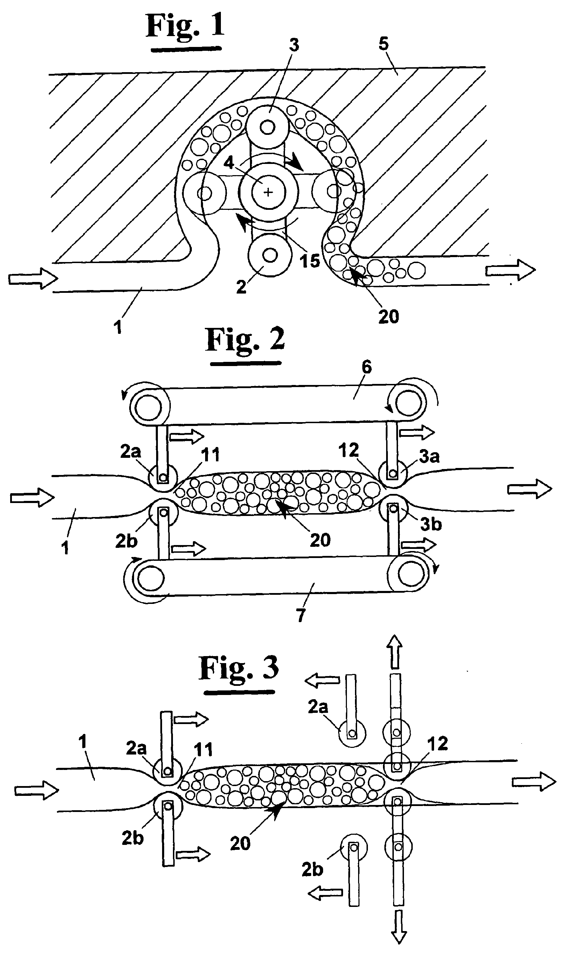

In figure 1 exemplary embodiment is diagrammatically shown of the invention for carrying out the product 20 conveying method between a first and a second point of a puree or juice making plant. Figures 2 and 3 present embodiments not part of the invention. In all the cases shown, the duct within which the product 20 flows comprises a flexible portion 1 that can be pressed to adjust the flow of said product 20 in said duct along a predetermined direction.

In particular, the pressing step of the flexible portion of said duct can be executed by pressing successive sections of the flexible portion in a product 20 conveying direction. According to the invention, the duct can be pressed at the flexible portion 1 through pressing means 2 and 3 movable in a product 20 conveying direction. The pressing means can comprise at least a first roller 2 and a second roller 3 mounted at the end of an arm 15 wheeled at the central portion about an axis 4 substantially orthogonal to the product 20 conveying direction. The rollers 2 and 3 cause the motion of the product 20 by pressing the flexible portion 1 of the duct against a support 5 located opposite with respect to the duct during their rotation about axis 4.

In the embodiment of figure 2 not part of the invention, instead, at least two couples of rollers 2a-3a and 2b-3b are provided mounted respectively on a first chain 6 and on a second chain 7, arranged at opposite sides with respect to the flexible portion 1 of the duct, which allow its movement in a product 20 conveying direction. More in detail, in use the corresponding rollers 2a-2b and 3a-3b are located at a distance less than the rest cross section of the duct, so that they press the flexible portion at points 11 and 12 and while moving they cause the product 20 to advance inside.

As shown in figure 3, rollers 2a and 2b in use can close on the flexible portion 1 of the duct for causing the product 20 to advance between a starting position 11 and an end position 12, for then opening at the end position and moving in a opposite direction back to the starting position.

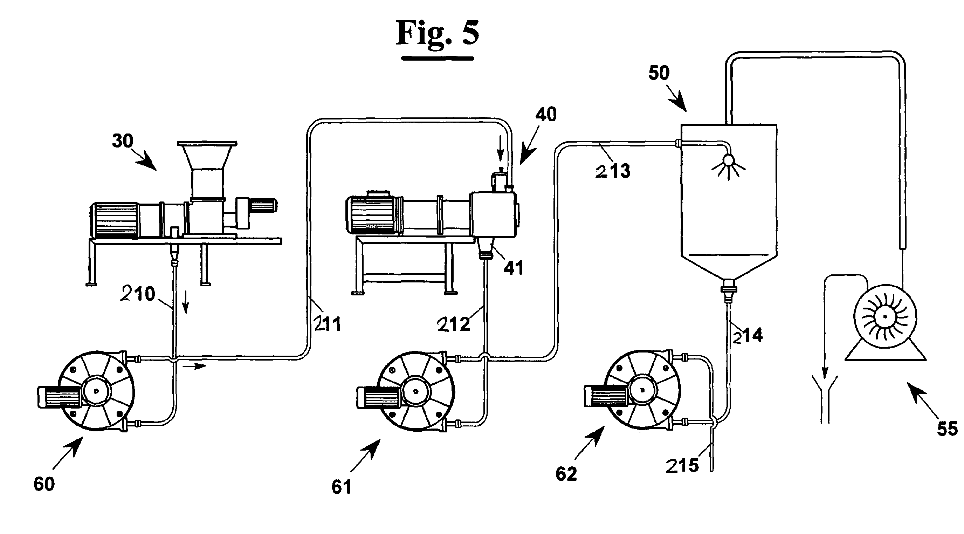

With reference to figure 5, a process for cold extraction of juice or puree from vegetable or animal food provides a first step of feeding the food, such as fruit and vegetables, meat or fish, whole or chopped, to a softening apparatus 30. The softened product 20 at the outlet of the apparatus 30, reaches an extracting apparatus 40, where the separation is carried out of the part that can be used (juice or puree) from the waste solid parts (peelings, seeds, hard fibres). According to the invention, the advancement of the product 20 from the outlet of the softening apparatus 30 up to the inlet of the extracting apparatus 40 is obtained by pressing a flexible portion 1 of the duct, for example integrated in a peristaltic pump 60. The peristaltic pump 60 can be mounted downstream of the turbo-extractor 40 without the need of putting reservoirs, ducts larger than the suction diameter of the pump, continuous or on-off level sensors, valves or devices for controlling flow and pressure of the puree.

The part of the product that can be used (juice or puree) is then conveyed towards an outlet 41 of the extracting apparatus 40 and reaches a duct 212. From there the product 20 is fed to an air removal apparatus 50, for example by using a second peristaltic pump 61. This can occur even if a preliminary softening step 30 had not been provided. This way, the duct 213 can flow directly in the cold air removal apparatus 50 without the need for non return valves, flap valves, spring valves, of back pressure valves, or valves of other type of other devices for adjusting the flow or keeping the vacuum in the air removal apparatus. Furthermore, downstream of the air removal apparatus 50 a third peristaltic pump 62 can be arranged that in turn does not need any valves, which should have been provided instead downstream of a pump of different type to keep the vacuum conditions as described above.

The product conveying method according to the invention allows, furthermore, to avoid the use of an automatic level sensor in the air removal apparatus 50, since the pump can be always moving, without the need of requiring always a presence of product 20, like the mono-pumps. This way, all the product 20 in the air removal apparatus 50 can be quickly and completely evacuated without requiring that part of the product remains inside.

The use of this product 20 conveying system between two different points of the plant allows, then, to keep the vacuum both in the air removal apparatus 50 located at the end of the process and in the ducts 210-215, in any working conditions. Furthermore, the use of the peristaltic pumps 60-62 prevents the product 20 from any shear stresses, ensuring an optimal consistency of the puree and keeping the original organoleptic characteristics for the entire product path.

A further advantage of the use of this product conveying system is that as the advancement of product 20 stops in any desired moment the air cannot pass in the ducts 210-215.

The use of a peristaltic pump 60 downstream of the extractor does not require the installation of a large diameter tube or of a reservoir, which would have been necessary instead for feeding correctly a mono-pump in case of the plants of prior art, as already described with reference to figure 4. The quick evacuation of the puree under the turbo-extractor can be executed with a tube of small diameter having simply the size of the pump connection exit mouth. Furthermore, the pump does not require a control system for blocking it in absence of product 20. The pump, in fact, does not get damaged and can keep the vacuum even without product 20, differently from mono-pumps that have to stop when they are without product 20, or other positive displacement pumps that without product 20 leave air to pass through.

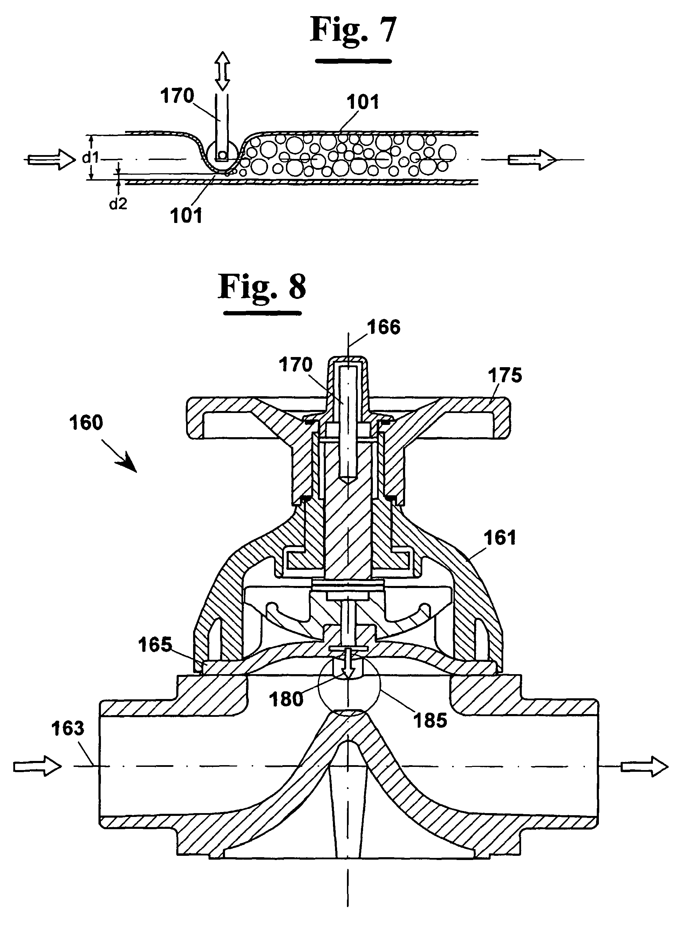

In figure 7 a possible exemplary embodiment is diagrammatically shown alternative to that of figures from 1 to 3, with pressing means that press the flexible portion of the duct 101. In particular, in this case pressing means 170 are provided movable along a direction substantially orthogonal to the conveying direction of the product flow. They press the flexible portion of the duct 101 causing a corresponding variation of a cross section of the flexible portion. In the case shown in figure 7 the cross section diameter of duct 101 changes from d1 to d2.

This result is achieved for example by membrane valve 160 of figure 8. In particular, membrane valve 160 comprises a body 161 in which a flexible element 165 is provided that is operated by a stem 170, movable along a direction 180, and causes a variation of a cross section 185 of the duct. In this case the use of a mechanical propulsion is not necessary if a head of product is provided upstream of the flexible portion. Alternatively, a suction pressure can be provided downstream of the flexible portion, for example the suction pressure of a turbo-extractor, without causing suction of air.

It is thus possible, according to the invention, to adjust easily the flow of the product 20 in the duct without forcing the product to pass through orifices or sections much smaller than necessary. Furthermore, there are not places where the product can stop still and that require to be washed frequently, for example hidden spaces of a valve, and there are not moving metal parts in contact with the product to which the product can stick, thus causing stops for clearing purposes.

Finally, since in a membrane valve there are not sealing elements, is not necessary a maintenance or change thereof, since the flexible portion has not discontinuities and can keep vacuum for a long time, and the only maintenance necessary is to change the flexible portion when worn.

The foregoing description of a specific embodiment will so fully reveal the invention according to the conceptual point of view, so that others, by applying current knowledge, will be able to modify and/or adapt for various applications such an embodiment without further research and without parting from the scope of the invention as defined by the appended claims.

## Claims

1. Method for conveying a puree product (20) between a first and a second point of a plant for making puree from vegetable or animal food, wherein
- said puree product is at room temperature,
- a conveying step is carried out in a duct comprising at least one flexible portion (1) by a pressing step of said flexible portion (1), said pressing step being effected by pressing successive sections of said flexible portion in a puree product conveying direction causing a corresponding variation of a cross section of said flexible portion, said pressing step of successive sections of said flexible portion (1) of said duct allowing to cause and to adjust the flow of said puree product (20) in said duct; **characterized in that** :
- said flexible portion (1) follows a circular path;
- said pressing step is carried out by pressing means comprising at least a first and a second roller (2,3) mounted at the end of an arm (15) that is wheeled at the centre (4) of said circular path;
- during the rotation of said arm (15) said first and said second roller (2,3) press said flexible portion (1) of said duct against an outer support (5) according to said circular path.

2. Method, according to claim 1, used in processes selected from the group comprised of:
- cold softening of puree;
- cold extraction of puree;
- cold air removal;
- a combination of at least two of the above processes.

3. Apparatus for conveying a puree product between a first and a second point of a plant for making puree from vegetable or animal food wherein:
- pressing means is provided for pressing a flexible portion (1) of a duct in which the puree product (20) flows, said pressing means pressing successive sections of said flexible portion (1) in a puree product conveying direction
**characterized in that**
said flexible portion (1) follows a circular path and said pressing means comprises at least a first and a second roller (2,3) mounted at the end of an arm (15) wheeled at the centre (4) of said circular path, during the rotation of said arm (15) said first and said second roller (2,3) pressing said flexible portion (1) of said duct against an outer support (5).

4. Apparatus, according to claim 3, wherein said flexible portion of the duct is integrated in a peristaltic pump (60).

5. Apparatus, according to claim 3, wherein said pressing means press said flexible portion at a determined cross section of said duct, said pressing means being fixed with respect to the product conveying direction.

## Patentansprüche

1. Verfahren zum Fördern eines Püreeprodukts (20) zwischen einem ersten und einem zweiten Punkt einer Anlage zum Herstellen von Püree aus pflanzlichem oder tierischem Nahrungsmittel, wobei
- das Püreeprodukt bei Zimmertemperatur vorliegt,
- ein Förderschritt ausgeführt wird in einer Leitung, die mindestens einen flexiblen Abschnitt (1) umfaßt, durch einen Schritt des Drückens des flexiblen Abschnitts (1), wobei der Schritt des Drückens ausgeführt wird durch Drücken aufeinanderfolgender Sektionen des flexiblen Abschnitts in einer Förderrichtung des Püreeprodukts, wodurch eine entsprechende Veränderung eines Querschnitts des flexiblen Abschnitts bewirkt wird, wobei der Schritt des Drückens aufeinanderfolgender Sektionen des flexiblen Abschnitts (1) der Leitung es zuläßt, den Strom des Püreeprodukts (20) in der Leitung zu bewirken und einzustellen, **dadurch gekennzeichnet, daß**;
- der flexible Abschnitt (1) einer kreisförmigen Bahn folgt,
- der Schritt des Drückens durch Drückmittel ausgeführt wird, die mindestens eine erste und eine zweite Rolle bzw. Walze (2,3) umfassen, die an dem Ende eines Arms (15) angebracht sind, der an dem Zentrum (4) der kreisförmigen Bahn radgelagert ist,
- während der Drehung des Arms (15) die erste und die zweite Rolle bzw. Walze (2,3) den flexiblen Abschnitt (1) der Leitung gegen eine äußere Halterung (5) gemäß der kreisförmigen Bahn drücken.

2. Verfahren gemäß Anspruch 1, verwendet in Prozessen, die aus der Gruppe ausgewählt sind, welche umfaßt:
- Kalterweichen von Püree,
- Kaltextraktion von Püree,
- Kaltluftentfernung,
- eine Kombination mindestens zweier der oben genannten Prozesse.

3. Vorrichtung zum Fördern eines Püreeprodukts zwischen einem ersten und einem zweiten Punkt einer Anlage zum Herstellen von Püree aus pflanzlichem oder tierischem Nahrungsmittel, wobei:
- Drückmittel vorgesehen sind zum Drücken eines flexiblen Abschnitts (1) einer Leitung, in der das Püreeprodukt (20) strömt, wobei die Drückmittel aufeinanderfolgende Sektionen des flexiblen Abschnitts (1) in einer Püreeprodukt-Förderrichtung drücken,
**dadurch gekennzeichnet, daß**
der flexible Abschnitt (1) einer kreisförmigen Bahn folgt und die Drückmittel mindestens eine erste und eine zweite Rolle bzw. Walze (2,3) umfassen, die an dem Ende eines Arms (15) angebracht sind, der an dem Zentrum (4) der kreisförmigen Bahn radgelagert ist, wobei während der Drehung des Arms (15) die erste und die zweite Rolle bzw. Walze (2,3) den flexiblen Abschnitt (1) der Leitung gegen eine äußere Halterung (5) drücken.

4. Vorrichtung gemäß Anspruch 3, wobei der flexible Abschnitt der Leitung in eine peristaltische Pumpe (60) integriert list.

5. Vorrichtung gemäß Anspruch 3, wobei die Drückmittel den flexiblen Abschnitt an einem vorbestimmten Querschnitt der Leitung drücken, wobei die Drückmittel bezüglich der Produktförderrichtung feststehen.

## Revendications

1. Procédé de transport de produit de purée (20) entre un premier point et un deuxième point d'une usine de production de purée à partir d'aliments végétaux ou animaux, dans lequel :
- ledit produit de purée est à température ambiante,
- une étape de transport est effectuée dans un conduit comprenant au moins une partie flexible (1) par une étape de pression de ladite partie flexible (1), ladite étape de pression étant effectuée par pression de sections successives de ladite partie flexible dans une direction de transport de produit de purée provoquant une variation correspondante d'une coupe transversale de ladite partie flexible, ladite étape de pression de sections successives de ladite partie flexible (1) dudit conduit permettant de provoquer et d'ajuster l'écoulement dudit produit de purée (20) dans ledit conduit ; **caractérisé en ce que** :
- ladite partie flexible (1) suit un chemin circulaire ;
- ladite étape de pression est effectuée par un moyen de pression comprenant au moins des premier et deuxième rouleaux (2, 3) montés à l'extrémité d'un bras (15) qui est rotatif au centre (4) dudit chemin circulaire ;
- au cours de la rotation dudit bras (15), lesdits premier et deuxième rouleaux (2, 3) pressent ladite partie flexible (1) dudit conduit contre un support extérieur (5) en fonction dudit chemin circulaire.

2. Procédé selon la revendication 1, utilisé dans des processus sélectionnés dans le groupe se composant de :
- assouplissement à froid de purée ;
- extraction froid de purée ;
- enlèvement d'air à froid ;
- une combinaison d'au moins deux des processus ci-dessus.

3. Appareil de transport d'un produit de purée entre un premier point et un deuxième point d'une usine de production de purée partir d'aliments végétaux ou animaux, dans lequel :
- un moyen de pression est fourni pour presser une partie flexible (1) d'un conduit dans lequel le produit de purée (20) s'écoule, ledit moyen de pression pressant des sections successives de ladite partie flexible (1) dans une direction de transport de produit de purée,
**caractérisé en ce que** :
ladite partie flexible (1) suit un chemin circulaire et ledit moyen de pression comprend au moins des premier et deuxième rouleaux (2, 3) montés à l'extrémité d'un bras (15) qui est rotatif au centre (4) dudit chemin circulaire ; au cours de la rotation dudit bras (15), lesdits premier et deuxième rouleaux (2, 3) pressant ladite partie flexible (1) dudit conduit contre un support extérieur (5).

4. Appareil selon la revendication 3, dans lequel ladite partie flexible du conduit est intégrée à une pompe péristaltique (60).

5. Appareil selon la revendication 3, dans lequel ledit moyen de pression presse ladite partie flexible à une coupe transversale déterminée dudit conduit, ledit moyen de pression étant fixe par rapport à la direction de transport de produit.
